# EUROPÄISCHE PATENTSCHRIFT

(11) **EP 1 400 382 B1**
(45) Veröffentlichungstag und Bekanntmachung des Hinweises auf die Patenterteilung: **09.04.2008**
(21) Anmeldenummer: 03019716.4
(22) Anmeldetag: 29.08.2003
(51) Int. Cl.: B60H 1/00

(54) **Vorrichtung zur Verteilung von Luft, insbesondere in einer Klimaanlage eines Kraftfahrzeugs**
Device for diffusing air particularly in a motor vehicle air conditioning installation
Dispositif de diffusion d'air, en particulier dans une installation de climatisation de véhicule automobile

(30) Priorität: 17.09.2002 DE 10243262
(43) Veröffentlichungstag der Anmeldung: 24.03.2004
(73) Patentinhaber: Behr GmbH & Co. KG, 70469 Stuttgart (DE)
(72) Erfinder: Hegner, Hilmar, 71364 Winnenden (DE); Klingler, Dietrich, 73540 Heubach (DE); Voigt, Klaus, 74321 Bietigheim-Bissingen (DE)
(74) Vertreter: Grauel, Andreas

(56) Entgegenhaltungen:
- WO-A-01/87654
- US-A1- 2001 014 582
- US-A1- 2002 000 254
- US-B1- 6 296 562
- US-B1- 6 354 934

## Beschreibung

Die Erfindung betrifft eine Vorrichtung zur Verteilung von Luft, insbesondere in einer Klimaanlage eines Kraftfahrzeugs, gemäß dem Oberbegriff des Anspruchs 1.

Aus der WO 01/87654 A1 ist eine Vorrichtung zur Verteilung von Luft für ein Kraftfahrzeug bekannt, bei der zur Regelung der Luftzufuhr zu einem Luftkanalsystem zu den verschiedenen Luftauslässen der Fußraumbelüftung, der Windschutzscheibenentfrostung und der Belüftung des Fahrzeuginnenraumes zwei napfförmige, formstabile Verteilerorgane vorgesehen sind. Am Au-ßenrand der napfförmigen Verteilerorgane ist jeweils eine Außenverzahnung vorgesehen, wobei die beiden Außenverzahnungen der Verteilerorgane miteinander in Eingriff sind und sich somit bei einer Veränderung der Einstellung gegenläufig zueinander verdrehen. Den Luftdurchlass in den napfförmigen Verteilerorganen bilden Ausschnitte. Jedoch lässt eine derartige Vorrichtung zur Verteilung von Luft noch Wünsche offen.

Die US 2001/014582 A1 offenbart eine mit Dichtlippen versehene Klappe zum Umschalten von Luftströmen in Klimaanlagen von Fahrzeugen.

Des Weiteren sind aus der US 6,296,562 B1 Luftkanalumschalt-Vorrichtungen bekannt, welche ein flexibles Band aufweisen.

Es ist Aufgabe der Erfindung derartige Vorrichtungen zu verbessern.

Diese Aufgabe wird gelöst durch eine Vorrichtung zur Verteilung von Luft mit den Merkmalen des Anspruchs 1. Vorteilhafte Ausgestaltungen sind Gegenstand der Unteransprüche.

Erfindungsgemäß ist eine Vorrichtung zur Verteilung von Luft vorgesehen, bei der das Verteilerorgan, worunter nachfolgend auch die Lagerung desselben zu verstehen ist, zumindest einen elastischen Bereich aufweist, wodurch das Verteilerorgan zumindest bereichsweise an den Einlass des jeweiligen, ausgewählten Luftkanals in Anlage gelangt und eine Abdichtung, insbesondere im Bereich der Öffnung, erfolgt. Dabei ist der elastische Bereich direkt im Bereich der Öffnung und/oder im Bereich der Lagerung/Stirnfläche vorgesehen.

Das Verteilerorgan ist glockenförmig, kegelstumpfförmig oder anderweitig rotationssymmetrisch ausgebildet, jedoch sind auch andere Ausgestaltungen möglich.

Bevorzugt ist das Verteilerorgan zentral, insbesondere im engeren Teil des Verteilerorgans, drehbar gelagert.

Gemäß einer bevorzugten Ausführungsform weist das Verteilerorgan eine Folie auf, die vorzugsweise durch ein Gerüst bereichsweise gestützt wird. Dabei ist die Folie vorzugsweise mit dem Gerüst verschweißt, verklebt, mechanisch gefügt oder auf sonstige Weise verbunden.

Gemäß einer weiteren bevorzugten Ausführungsform ist das Verteilerorgan ein dünnwandiges Kunststoff-Spritzgussteil, beispielsweise Polyamid, insbesondere mit einer Wandstärke der Mantelfläche von ca. 1 mm.

Gemäß einer bevorzugten Ausführungsform weist das Verteilerorgan eine elastische Lagerung auf. Die elastische Lagerung bewirkt eine optimale Anpassung des Verteilerorgans an den Einlass des jeweiligen, ausgewählten Luftkanals.

Das Verteilerorgan weist einen elastischen Bereich in der Nähe der Lagerung auf, wobei der elastische Bereich vorzugsweise durch eine oder mehrere Öffnungen in der Stirnfläche gebildet wird.

Im Folgenden wird die Erfindung anhand zweier Ausführungsbeispiele unter Bezugnahme auf die Zeichnung im Einzelnen erläutert. In der Zeichnung zeigen:
- Fig. 1: ein erstes Ausführungsbeispiel im eingebauten Zustand,
- Fig. 2: das Verteilerorgan Fig. 1 aus einer anderen Perspektive, und
- Fig. 3: ein zweites Ausführungsbeispiel.

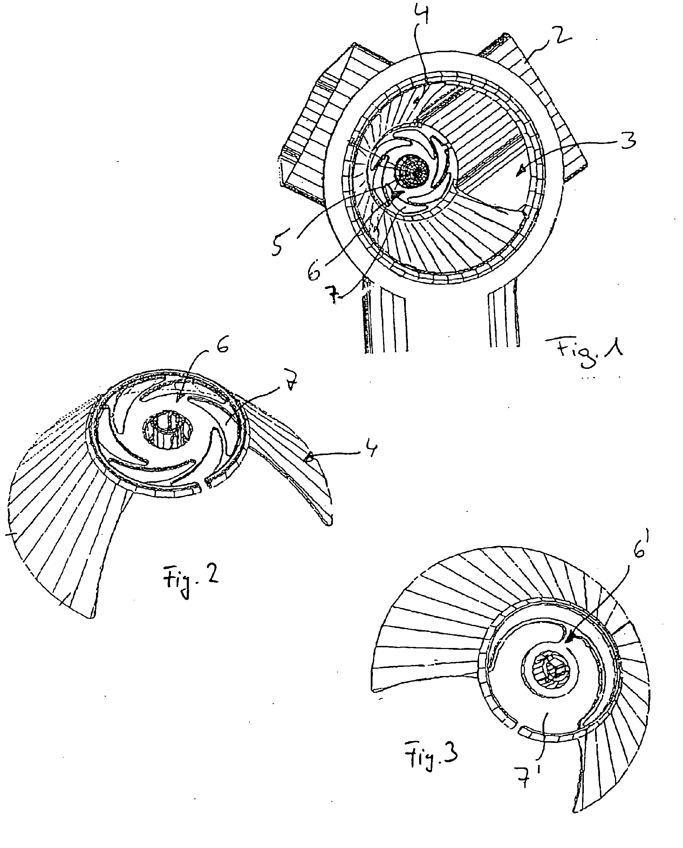

Fig. 1 und 2 zeigen als erstes Ausführungsbeispiel ein Verteilerorgan 1 einer Klimaanlage eines Kraftfahrzeugs, welches Luft über ein Luftkanalsystem mit drei Luftkanälen 2 entsprechenden Luftauslässen, vorliegend der Fußraumbelüftung, der Windschutzscheibenentfrostung und der Belüftung des Fahrzeuginnenraumes, je nach Bedarf zuführt. Das Verteilerorgan 1 ist in einer Art Gehäuse drehbar angeordnet, in welches auch die Eintritte der Luftkanäle 2 integriert sind.

Das Verteilerorgan 1 weist eine kegelstumpfförmige Gestalt mit einer Öffnung 3 in ihrer Mantelfläche 4 auf. Hierbei nimmt die Öffnung 3 etwa ein Drittel der gesamten Mantelfläche 4 ein. Die Ausgestaltung der Öffnung 3 entspricht im Wesentlichen derjenigen der Eintritte in die Luftkanäle 2.

Die drehbare Anbringung des Verteilerorgans 1 erfolgt über eine Welle 5 im zentralen engeren Teil, auf welchen im Folgenden als Stirnfläche 6 Bezug genommen wird. Die Stirnfläche 6 des Verteilerorgans 1 weist sechs annähernd dreieckförmige Öffnungen 7 auf, welche dazu dienen, dass die Mantelfläche 4 nicht notwendigerweise vollständig konzentrisch zur Drehachse ausgerichtet sein muss, sondern sich an das Gehäuse anlegen kann. Zur Optimierung der Anlage an das Gehäuse ist die Mantelfläche 4 im Bereich der Öffnung 3 bei der Stirnfläche 6 geschlitzt ausgebildet.

Im übrigen wird insbesondere in Hinblick auf die Funktion und Steuerung des Verteilerorgans auf die eingangs als Stand der Technik genannte WO 01/87654 hingewiesen und diese auch ausdrücklich als Offenbarung einbezogen.

Die Koppelung einzelner Verteilerorgane ist mittels Getrieben, beispielsweise mittels Zahnrädern, Reibrädern, Riementrieb, möglich, wobei die Getriebe nicht direkt mit den Verteilerorganen und auch nicht direkt miteinander verbunden sein müssen. Der Antrieb kann beispielsweise direkt von Hand oder mittels eines entsprechend gesteuerten elektrischen Stellmotors erfolgen.

Das in Fig. 3 dargestellte zweite Ausführungsbeispiel stimmt im Wesentlichen mit dem zuvor beschriebenen ersten Ausführungsbeispiel überein, jedoch weist die Stirnfläche 6' eine einzige, sichelförmige Öffnung 7' zur Optimierung der Anlage an das Gehäuse auf.

### Bezugszeichenliste

- 1: Verteilerorgan
- 2: Luftkanal
- 3: Öffnung
- 4: Mantelfläche
- 5: Welle
- 6, 6': Stirnfläche
- 7, 7': Öffnung

## Patentansprüche

1. Vorrichtung zur Verteilung von Luft, insbesondere in einer Klimaanlage eines Kraftfahrzeugs, auf ein Luftkanalsystem mit mehreren Luftkanälen (2), welche Luft zu verschiedenen Luftauslässen leiten, mit einem drehbar in einem Gehäuse angeordneten Verteilerorgan (1), das durch Drehung einzelne Luftkanäle (2) des Luftkanalsystems mittels einer im Verteilerorgan (1) angeordneten Öffnung (3) freigibt, wobei das Verteilerorgan (1) mit einem Teil im Bereich der Öffnung (3) zumindest bei durchströmender Luft in Anlage an das Gehäuse, glockenförmig oder kegelstumpfförmig ausgebildet und zentral, insbesondere im engeren Teil des Verteilerorgans (1), drehbar gelagert ist, **dadurch gekennzeichnet, dass** das Verteilerorgan (1) zumindest einen elastischen Bereich aufweist, wobei der elastische Bereich im Bereich in der Nähe der Lagerung vorgesehen ist und durch eine oder mehrere Öffnungen (7; 7') in einer Stirnfläche (6; 6') des Verteilerorgans gebildet ist.

2. Vorrichtung nach Anspruch 1, **dadurch gekennzeichnet, dass** das Verteilerorgan (1) eine Folie aufweist.

3. Vorrichtung nach Anspruch 2, **dadurch gekennzeichnet, dass** das Verteilerorgan (1) ein die Folie stützendes Gerüst aufweist.

4. Vorrichtung nach Anspruch 3, **dadurch gekennzeichnet, dass** die Folie mit dem Gerüst verbunden ist.

5. Vorrichtung nach einem der vorhergehenden Ansprüche, **dadurch gekennzeichnet, dass** das Verteilerorgan (1) ein dünnwandiges Kunststoff-Spritzgussteil ist.

6. Vorrichtung nach einem der vorhergehenden Ansprüche, **dadurch gekennzeichnet, dass** das Verteilerorgan (1) eine elastische Lagerung aufweist.

## Claims

1. Device for diffusing air, particularly in an air-conditioning installation of a motor vehicle, to an air duct system with a plurality of air ducts (2) that pass air to various air outlets, with a diffuser element (1) arranged to rotate within a housing, which, by rotation, opens up individual air ducts (2) of the air duct system by means of an opening (3) positioned in the diffuser element (1), such that the diffuser element (1), with a part in the area of the said opening (3) and at least when air is flowing through, is in contact with the housing, being of bell or truncated conical shape and being mounted to rotate centrally, in particular in the narrower portion of the diffuser element (1),
**characterised in that** the diffuser element (1) comprises at least one elastic zone, this elastic zone being provided in the area close to the mounting and being formed by one or more openings (7; 7') in an end face (6; 6') of the diffuser element.

2. Device according to Claim 1, **characterised in that** the diffuser element (1) comprises a foil.

3. Device according to Claim 2, **characterised in that** the diffuser element (1) comprises a frame that supports the foil.

4. Device according to any of the preceding claims, **characterised in that** the foil is connected to the frame.

5. Device according to any of the preceding claims, **characterised in that** the diffuser element (1) is a thin-walled plastic injection moulding.

6. Device according to any of the preceding claims, **characterised in that** the diffuser element (1) has an elastic mounting.

## Revendications

1. Dispositif de répartition d'air, en particulier dans un système de climatisation d'un véhicule automobile, sur un système de conduits d'air comprenant plusieurs conduits d'air (2) qui dirigent de l'air vers différentes sorties d'air, dispositif qui comprend un organe diffuseur (1) disposé de manière à pouvoir tourner dans un carter, lequel organe diffuseur libère, par rotation, différents conduits d'air (2) du système de conduits d'air, au moyen d'une ouverture (3) disposée dans l'organe diffuseur (1), où l'organe diffuseur (1), avec une partie située dans la zone de l'ouverture (3), vient en appui sur le carter au moins lorsque de l'air traverse, est configuré en forme de cloche ou en forme de tronc de cône et, de manière centrale, en particulier dans la partie plus étroite de l'organe diffuseur (1), est monté en rotation,
**caractérisé en ce que** l'organe diffuseur (1) présente au moins une zone élastique, où la zone élastique est prévue dans la zone placée à proximité du logement et est formée par une ou plusieurs ouvertures (7 ; 7'), dans une surface frontale (6 ; 6') de l'organe diffuseur.

2. Dispositif selon la revendication 1, **caractérisé en ce que** l'organe diffuseur (1) présente une feuille.

3. Dispositif selon la revendication 2, **caractérisé en ce que** l'organe diffuseur (1) présente une structure supportant la feuille.

4. Dispositif selon la revendication 3, **caractérisé en ce que** la feuille est reliée à la structure.

5. Dispositif selon l'une quelconque des revendications précédentes, **caractérisé en ce que** l'organe diffuseur (1) est une pièce moulée par injection, en matière plastique et à paroi mince.

6. Dispositif selon l'une quelconque des revendications précédentes, **caractérisé en ce que** l'organe diffuseur (1) présente un logement élastique.
